# EUROPÄISCHE PATENTSCHRIFT

(11) **EP 1 892 428 B1**
(45) Veröffentlichungstag und Bekanntmachung des Hinweises auf die Patenterteilung: **08.02.2012**
(21) Anmeldenummer: 07016525.3
(22) Anmeldetag: 23.08.2007
(51) Int. Cl.: F16B 39/02, F16B 39/10

(54) **Kernumfassungsschraube, Anordnung und Verfahren zum gesicherten Einbau und/oder Austausch von Kernumfassungsschrauben**
Core perimeter screw, assembly and method for secure mounting and/or replacement of core perimeter screws
Vis d'enroulement de noyau, agencement et procédé d'installation et/ou d'échange sécurisé de vis d'enroulement de noyau

(30) Priorität: 28.08.2006 DE 102006040272
(43) Veröffentlichungstag der Anmeldung: 27.02.2008
(73) Patentinhaber: Westinghouse Electric Germany GmbH, 68167 Mannheim (DE)
(72) Erfinder: Strohmayer, Thomas, 68526 Ladenburg (DE); Lenz, Herbert, 55270 Zornheim (DE); Neuber, Andreas, 68163 Mannheim (DE)
(74) Vertreter: Miller, Toivo

(56) Entgegenhaltungen:
- EP-A- 0 268 817
- DE-A1- 3 626 338
- DE-U1- 9 013 075
- US-A- 6 164 886

## Beschreibung

Die Erfindung betrifft eine Anordnung mit Kernumfassungsschraube und Sicherungsblech für einen gesicherten Einbau und/oder Austausch von Kernumfassungsschrauben zur Montage von Kernumfassungsblechen sowie ein Verfahren zum Einbau und/oder Austausch von Kernumfassungsschrauben in einem Reaktordruckbehälter, gemäß den Oberbegriffen der unabhängigen Ansprüche.

Gängige Reaktordruckbehälter mit Einbauten umfassen beispielsweise den eigentlichen Reaktor- oder Kernbehälter, ein Be- und Entladesystem zum Einbringen und Entnehmen beziehungsweise Auswechseln der Regelstäbe sowie eine Tragekonstruktion, in welcher der Reaktorkern ruht und welche den Kühlmittelstrom auf die einzelnen Brennelemente verteilt. Diese sieht in aller Regel eine Kernumfassung, eine obere Tragplatte, eine untere Tragplatte, eine untere Gitterplatte, sowie einen Strömungsverteiler und einen inneren Tragwerkszylinder vor. Darüber hinaus können noch weitere Einbauten vorgesehen sein, wie beispielsweise Stutzen für den Steuerelementantrieb, eine Überströmvorrichtung, Führungsrohre für eine Innenkerninstrumentierung, ein Steuerelementführungsrohr sowie eine obere Gitterplatte.

Bei herkömmlichen Konstruktionen von Reaktordruckbehältern sowie deren Einbauten, wie beispielsweise beim Reaktortyp WER 440 eingesetzt, wird die Kernumfassung dabei aus mehreren Kernumfassungsblechen gebildet, welche mit Kernumfassungsschrauben an den Formrippen des Reaktordruckbehälters beziehungsweise dessen Kerngerüstes befestigt werden. Eine entsprechende Schraubenverbindung umfasst dabei die jeweilige Kernumfassungsschraube, üblicherweise eine Schraube mit Gewinde M12, ein Sicherungsblech und eine Distanzscheibe. Die Kernumfassungsschraube ist dabei gegen Verdrehen und/oder Lösen im Sicherungsblech durch Verschweißen gesichert und zur Vermeidung von Überständen mit dem Sicherungsblech weitestgehend glatt verschliffen.
Die Kernumfassungsbleche des Reaktors werden dabei vor Erstinbetriebnahme des Reaktors im Trockenen montiert, gewährleisten einen gleichgerichteten und gleichmäßigen Durchfluss des Kühlmittels über den gesamten Querschnitt des aktiven Kerns und schützten den eigentlichen Reaktordruckbehälter vor den Auswirkungen der Neutronenstrahlung. Nach Fluten des Reaktordruckbehälters und Inbetriebnahme des Reaktors ist eine Reparatur oder ein Austausch vorgenannter Einbauten nur noch unter erschwerten Bedingungen möglich, wobei ein Reparaturkonzept während des Betriebes des Reaktors nicht vorliegt.

Im Betrieb des Reaktors treten aufgrund von betrieblichen thermischen Belastungen und vergleichsweise hohen Strahlungsumfeldern oftmals Beschädigung und/oder Versprödungen an verschiedene Einbauten, insbesondere jedoch an den Befestigungsschrauben der Kernumfassungsbleche, den sogenannten Kernumfassungsschrauben auf.

Da sich die Bauteile nach Inbetriebnahme des Reaktors unter Flüssigkeit, insbesondere Wasser, befinden, ist ein Austausch der Kernumfassungsschrauben mit anschließender Schweißsicherung und Nachbearbeitung der Schweißnaht per Verschleifung nur mit hohem Aufwand durchzuführen und erscheint demgemäß als Reparaturkonzept als eher nicht geeignet.

Demgemäß ist aus der EP 0268817 A1 ein zum Verbinden zweier Bauteile vorgesehenes mechanisches Verbindungselement angegeben, welches einen mit einem Kopf versehenen Bolzen umfasst, der ein erstes Bauteil durchdringt und an einem zweiten Bauteil verankert ist. Der Kopf des Verbindungselementes, an dem ein Sicherungsnapf angeformt ist, ist als Mehrkant ausgebildet, in einer mit einer Hohlkehle versehenen Aussparung des ersten Bauteils versenkt angeordnet und durch Ausbiegen des Sicherungsnapfes in die Hohlkehle gegen Lösen sicherbar.

Weiterhin ist aus der US 6 164 886 A eine Befestigungsschraube zur gesicherten Verbindung zweier struktureller Bauelemente eines Kernreaktors mit einem Schaft mit Außengewinde sowie einem Schraubenkopf mit Profil, welcher eine umlaufende kragenförmige Anformung aufweist, bekannt geworden

Der Erfindung liegt die Aufgabe zu Grunde ein vereinfachtes Reparaturkonzept für Kernumfassungen und insbesondere eine vereinfachte Möglichkeit für den Austausch beziehungsweise die Erneuerung von Kernumfassungsschrauben anzugeben.

Diese Aufgabe wird durch eine Anordnung mit den Merkmalen des Anspruchs 1 bzw. ein Verfahren mit den Merkmalen des Anspruchs 23 gelöst. Vorteilhafte Weiterbildungen der Anordnung mit Kernumfassungsschraube und Sicherungsblech für einen gesicherten Einbau von Kernumfassungsschrauben zur Montage von Kernumfassungsblechen sowie ein Verfahren zum Einbau und/oder Austausch von Kernumfassungsschrauben sind in weiteren Ansprüchen und der nachfolgenden Beschreibung angegeben.

Die Anordnung für den gesicherten Einbau von Kernumfassungsschrauben zur Montage von Kernumfassungsblechen umfasst wenigstens eine Kernumfassungsschraube sowie wenigstens ein Sicherungsblech, wobei die Kernumfassungsschraube einen Schraubenschaft mit Außengewinde sowie einen Schraubenkopf mit Profil, vorzugsweise ein Außensechskant, umfasst, welcher Schraubenkopf eine zumindest anteilig umlaufende Anformung aufweist und wobei im Sicherungsblech wenigstens eine Innensenkung zur Aufnahme des Schraubenkopfes, eine erste Ausnehmung, insbesondere ein Loch oder eine Bohrung, zum Durchgriff der Kernumfassungsschraube sowie zur mechanischen Sicherung der Kernumfassungsschraube gegen Verdrehen zumindest eine Ausnehmung zum Eingriff der Schraubenkopfanformung nach mechanischer Verformung vorgesehen sind.

Die Kernumfassungsschraube wird dabei über den beispielsweise Außensechskant des Schraubenkopfes drehmomentkontrolliert eingebaut und durch mechanische Verformung der Anformung gegen Verdrehen beziehungsweise Losdrehen in der wenigstens einen Ausnehmung des Sicherungsbleches gesichert.

Die Anformung kann dabei beispielsweise ringartig oder als Schraubenkopfkragen ausgebildet sein.

Vorteilhaft ist zwischen Schraubenkopfkragen und Schraubenkopf ein Abstand zum Eingriff eines entsprechenden Werkzeuges, beispielsweise der Nuss eines Drehmomentschlüssels oder eines Ringschlüssels, zum drehmomentkontrollierten Einbau der Kernumfassungsschraube vorgesehen.

Die Anformung des Schraubenkopfes ist mechanisch verformbar und weist in einer vorteilhaften Ausbildung der Kernumfassungsschraube eine Materialdicke von ca. 0,5 mm auf.

In besonderer Ausgestaltung ist die Anformung, insbesondere die als Schraubenkopfkragen ausgestaltete Anformung, einstückig oder als mehrere einzelne Segmente ausgebildet.

Die Anformung des Schraubenkopfes umgibt den Schraubenkopf umfänglich dabei zumindest anteilig, beispielsweise in Form eines oder mehrerer Ring- oder Kragensegmente, welche auch umfänglich einander beabstandet angeordnet sein können.

Die als Schraubenkopfkragen ausgebildete Anformung schließt dabei in vorteilhafter Weiterbildung mit der Oberkante des Schraubenkopfes ab.

In einer alternativen Ausgestaltung der Kernumfassungsschraube weist die als Schraubenkopfkragen ausgebildete Anformung eine geringere Kragenhöhe als der Außensechskant des Schraubenkopfes auf.

Der Übergangsbereich zwischen dem Schaft und dem Kopf der Kernumfassungsschraube ist in vorteilhafter Weiterbildung gekrümmt, insbesondere mit einem parabelfömigen Verlauf ausgebildet.

In vorteilhafter Ausbildung weist das Sicherungsblech der Anordnung in seiner Innensenkung im Boden ein Loch oder eine Bohrung zum Durchgriff der Kernumfassungsschraube in das komplementäre Innengewinde einer Formrippe zur Befestigung des jeweiligen Kernumfassungsbleches auf.

Die erste Ausnehmung der Innensenkung zum Durchgriff der Kernumfassungsschraube, insbesondere ein Loch oder eine Bohrung, ist dabei vorzugsweise mittig beziehungsweise zentrisch im Boden der Innensenkung angeordnet.

Weiterhin ist im Sicherungsblech, die wenigstens eine weitere Ausnehmung , in welche die Anformung des Schraubenkopfes nach mechanischer Verformung zur Sicherung der Kernumfassungsschraube gegen Verdrehen eingreift, im oberen Rand- und/oder Wandbereich der Innensenkung vorgesehen. Auch ist eine Ausgestaltung möglich, bei welcher die wenigstens eine Ausnehmung im Bodenbereich der Innensenkung angeordnet ist.

In einer bevorzugten Ausgestaltung weist das Sicherungsblech, insbesondere der obere Randbereich und/oder der Bodenbereich der Innensenkung, vier um 90° gegeneinander versetzte Ausnehmungen zum Eingriff der Anformung des Schraubenkopfes, insbesondere der als Schraubenkopfkragen ausgestalteten Anformung, und damit zur mechanischen Sicherung der Kernumfassungsschraube auf.

In einer vorteilhaften Weiterbildung ist die Innensenkung derart ausgestaltet, dass sie den Schraubenkopf mit Anformung der Kernumfassungsschraube vollständig aufnimmt und der Schraubenkopf vorzugsweise bündig mit der Oberseite des Sicherungsbleches abschließt.

In einer weiteren vorteilhaften Ausgestaltung besitzt das Sicherungsblech eine ovale, insbesondre elliptische Grundform und ruht in eingebauten Zustand der Kernumfassungsschraube in einer entsprechend geformten Ausnehmung des Kernumfassungsbleches, wodurch das Sicherungsblech gegen Verdrehen gegenüber dem Kernumfassungsblech gesichert und sein Einbau erleichtert ist.

Demgemäß greift die Anformung des Schraubenkopfes, insbesondere die als Schraubenkopfkragen ausgebildete Anformung, nach Einbau der Kernumfassungsschraube und mechanischer Verformung der Anformung in wenigstens eine der, insbesondere vier um 90° versetzten, Ausnehmungen der Innensenkung der Sicherungsscheibe ein.

Weiterhin wird ein Verfahren zum Einbau und/oder Austausch von Kernumfassungsschrauben beansprucht, wobei schrittweise
- Der Schraubenkopf einer vorhandenen, auszutauschenden Kernumfassungsschraube freigelegt und/oder ein Schraubenkopfprofil, insbesondere ein Vierkant, zum Herausdrehen der vorhandenen Schraube eingearbeitet wird,
- Die vorhandene Schraube herausgedreht und das vorhandene Sicherungsblech abgezogen wird,
- ein neues Sicherungsblech mit Innensenkung mit wenigstens einer Ausnehmung im Bereich der Innensenkung aufgesetzt wird,
- eine Kernumfassungsschraube mit Schraubenkopfanformung eingedreht wird und
- die Anformung mechanisch derart verformt wird, dass sie in die wenigstens eine Ausnehmung der Innensenkung des Sicherungsbleches eingreift, wodurch eine mechanische Sicherung der neuen Kernumfassungsschraube gegen Verdrehen bewirkt wird.

In einer vorteilhaften Ausbildung des Verfahrens werden in einem ersten vorbereitenden Verfahrensschritt wenigstens zwei Löcher durch das Kernumfassungsblech und/oder eine dahinter liegende Distanzscheibe und/oder in die das Blech tragende Formrippe gebohrt und/oder in wenigstens zwei der gebohrten Löcher je ein Sicherungsstift eingebracht.

Die Sicherungsstifte werden dabei derart eingebracht, dass sie die Distanzscheibe und/oder und das Kernumfassungsblech in ihrer bestimmungsgemäßen Einbauposition sowie gegeneinander fixieren, auch nach Herausdrehen der Kernumfassungsschraube und/oder Abziehen des Sicherungsbleches.

In vorteilhafter Weiterbildung werden die Sicherungsstifte bezüglich ihrer Länge derart bemessen, dass sie das Kernumfassungsblech nicht überragen beziehungsweise nicht überstehen, sondern insbesondere bündig mit diesem abschließen.

Dies zu erreichen werden in einer vorteilhaften Ausgestaltung des Verfahrens die Sicherungsstifte mittels Tiefenanschlag definiert eingedrückt und/oder über eine Presspassung gesichert.

In einer weiteren vorteilhaften Weiterbildung des Verfahrens wird in einem weiteren Zwischenschritt eine Nacharbeitung der Sitzfläche des Sicherungsbleches durchgeführt.

In einer Weiterbildung des Verfahrens wird in einem weiteren Zwischenschritt nach Herausdrehen der Kernumfassungsschraube und/oder Abziehen des Sicherungsbleches zum erleichterten Einbau des Sicherungsbleches mit Innensenkung mit Ausnehmung zum Eingriff der Schraubenkopfanformung wenigstens ein Führungsdorn installiert, insbesondere in die Gewindebohrung der Formrippe eingedreht.

Der Führungsdorn durchgreift dabei vorteilhaft eine gegebenenfalls vorhandene Distanzscheibe sowie das Kernumfassungsblech.

Der Führungsdorn wird vor Einsetzen des Sicherungsbleches mit Innensenkung mit Ausnehmung zum Eingriff der Schraubenkopfanformung wieder herausgedreht und dient lediglich als Führung zur Bearbeitung beziehungsweise Nachbearbeitung der Sitzfläche.

In einer vorteilhaften Weiterbildung des Verfahrens erfolgt die mechanische Verformung der Schraubenkopfanformung mittels eines entsprechenden Press- oder Stanzwerkzeuges, welches die Schraubenkopfanformung partiell in die dafür vorgesehenen Ausnehmungen des Sicherungsbleches drückt, wodurch die Kernumfassungsschraube mechanisch gegen Verdrehen gesichert wird.

Erfindungsgemäß kann durch vorgenannte Merkmale eine aufwendige Nachbearbeitung zur Sicherung der Kernumfassungsschraube, insbesondere durch Verschweißen und Verschleifen, vermieden werden wodurch die Reparatur der Kernumfassung erheblich vereinfacht wird.

Die weitere Darlegung der Erfindung und vorteilhafter Ausgestaltungen erfolgt anhand einiger Figuren und Ausführungsbeispiele.

Es zeigen
- Figur 1: eine seitliche Schnittansicht eines herkömmlich an einer Formrippe montierten Kernumfassungsblechs
- Figur 2: eine räumliche Darstellung einer beispielhaft ausgebildeten Kernumfassungsschraube mit Schraubenkopfkragen
- Figur 3: eine beispielhaft ausgebildete Kernumfassungsschraube mit Schraubenkopfkragen in Draufsicht auf den Schraubenkopf
- Figur 4: eine seitliche Schnittansicht einer beispielhaft ausgebildeten Kernumfassungsschraube mit Schraubenkopfkragen
- Figur 5: eine seitliche Schnittansicht eines mittels einer Anordnung mit Kernumfassungsschraube mit Schraubenkopfanformung und Sicherungsblech an eine Formrippe montierten Kernumfassungsbleches
- Figur 6: eine Draufsicht auf die Anordnung gemäß Fig. 5
- Figur 7: eine seitliche Schnittansicht eines mittels einer Anordnung mit Kernumfassungsschraube mit Schraubenkopfanformung und Sicherungsblech an eine Formrippe montierten Kernumfassungsbleches
- Figur 8: eine räumliche Darstellung eines beispielhaft ausgestalteten erfindungsgemäßen Sicherungsblechs
- Figur 9a: eine räumliche Schrägansicht einer Anordnung gemäß Fig. 6 mit nicht verformtem Schraubenkopfkragen
- Figur 9b: räumliche Schrägansicht einer Anordnung gemäß Fig. 6 mit verformtem Schraubenkopfkragen und Eingriff desselben in Ausnehmungen des Sicherungsbleches
- Figur 10: eine seitliche Schnittansicht eines mittels einer Anordnung mit Kernumfassungsschraube mit Schraubenkopfanformung und Sicherungsblech an eine Formrippe montierten Kernumfassungsbleches
- Figur 11: beispielhafter Verfahrensablauf zum Einbau und/oder Austausch von Kernumfassungsschrauben zur gesicherten Befestigung von Kernumfassungsblechen

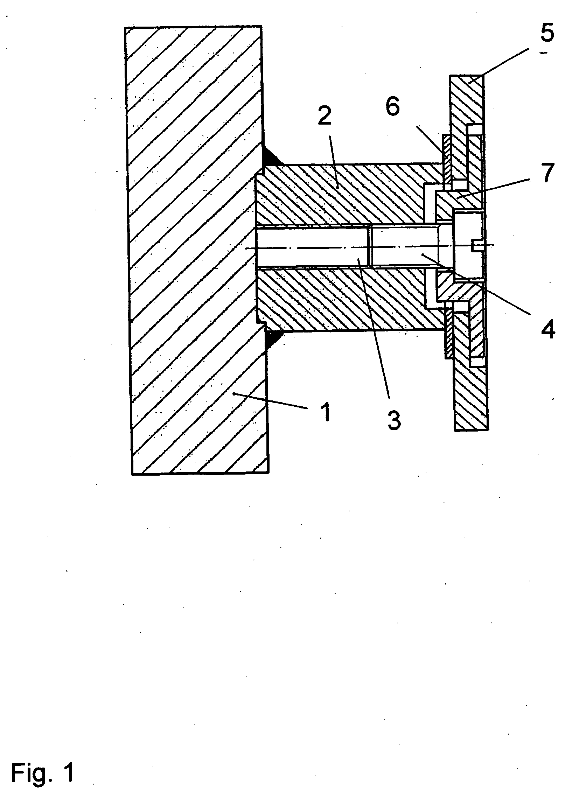

In Figur 1 ist eine seitliche Schnittansicht eines auf herkömmliche Weise an einer Formrippe montierten Kernumfassungsblechs, insbesondere bei Erstmontage, mittels Kernumfassungsschraube und Sicherungsblech angegeben. Demgemäß sind an der Wandung eines Reaktordruckbehälterkerngerüstes 1 - zur Vereinfachung hier lediglich ausschnittsweise gezeigt - Formrippen 2 mit jeweils einer Gewindebohrung 3 zur Aufnahme einer Kernumfassungsschraube 4 zur Befestigung eines entsprechenden Kernumfassungsbleches 5 vorgesehen.

Um eine genaue Ausrichtung und Paßsitz des Kernumfassungsbleches 5 sowie Sicherungsbleches 7 zu gewährleisten, ist zwischen Kernumfassungsblech 5 und Formrippe 2 eine Distanzscheibe 6 angeordnet. Das Sicherungsblech 7 weist eine Innensenkung mit Loch, insbesondere Bohrung, zum Durchgriff der Kernumfassungsschraube 4 auf und greift in verbautem Zustand in eine Ausnehmung des Kernumfassungsbleches 5 ein, wodurch dieses nach Einbau der Kernumfassungsschraube 4 in angestammter Position und Ausrichtung fixiert ist. Die Kernumfassungsschraube 4 wird dabei drehmomentkontrolliert in die Gewindebohrung 3 der jeweiligen Formrippe 2 eingedreht, wobei sie das Sicherungsblech 7, das Kernumfassungsblech 5 und die Distanzscheibe 6 durchgreift und diese an der Formrippe 2 befestigt.

Nach Eindrehen der Kernumfassungsschraube 4, wird die Schraube üblicherweise durch Verschweißen mit dem Sicherungsblech 7 gegen Verdrehen und/oder Losdrehen gesichert.

Nach erfolgtem Einbau und Verschweißen der Kernumfassungsschraube 4 werden die Oberflächen von Schraube 4 und Sicherungsblech 7 dann bündig verschliffen, um durch den Schweißvorgang bedingte Überstände und/oder Nähte zu entfernen und eine glatte, plane Ober- beziehungsweise Innenfläche zu schaffen.

Ist mittels dieser Anordnung ein Ersteinbau der Kernumfassungsschraube 4 sowie ein Verschweißen der Schraube 4 noch ohne weiteres möglich, so erscheint dies bei einem Austausch beziehungsweise einer Erneuerung der jeweiligen Kernumfassungsschraube 4 schon sehr viel schwieriger und nur mit erheblichem Aufwand realisierbar, da das Reaktordruckbehälterkerngerüst 1 dann bereits geflutet ist, insbesondere mit Wasser, und die entsprechende Schraube sowie Sicherungsblech nicht mehr ohne Weiteres zugänglich sind.

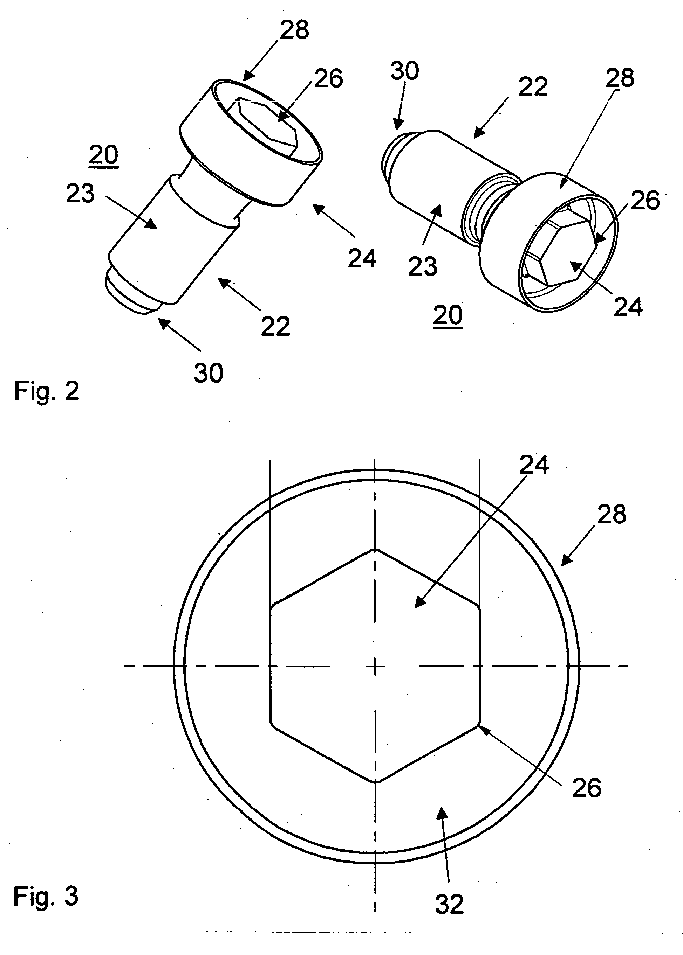

In Figur 2 ist eine beispielhaft ausgebildete Kernumfassungsschraube 20 in räumlicher Darstellung aus zwei unterschiedlichen Blickrichtungen gezeigt. Vorgenannte Schraube 20 umfasst dabei einen Schraubenschaft 22 mit Außengewinde 23 sowie einen Schraubenkopf 24 mit Schraubenkopfprofil, vorzugsweise Außensechskant 26, welcher eine zumindest anteilig umlaufende, kragenartig ausgebildete Anformung 28, im folgenden auch als Schraubenkopfkragen bezeichnet, aufweist.

Alternativ ist die Anformung dabei beispielsweise auch ringartig und/oder als Scheibe ausbildbar.

Um das Ansetzen und/oder Eindrehen der Kernumfassungsschraube 20 zu erleichtern ist der dem Schraubenkopf 24 abgewandte freie Endbereich 30 der Schraube 20 sich verjüngend, insbesondere konisch ausgebildet. Grundsätzlich kann die Verjüngung 30 auch pyramidal oder mit beliebiger anderer geometrischer Grundfläche ausgebildet sein.

Weiterhin ist, wie in Fig. 3 gezeigt, zwischen Schraubenkopfkragen 28 und Schraubenkopf 24 beziehungsweise Außensechskant 26 ein unlaufender Freibereich 32 zum Eingriff eines entsprechenden Werkzeuges, beispielsweise der Nuss eines Drehmomentschlüssels oder eines Ringschlüssels, zum drehmomentkontrollierten Einbau der Kernumfassungsschraube 20 vorgesehen. Der Freibereich 32 ist dabei nutartig ausgebildet. Der Schraubenkopfkragen 28 ist, insbesondere hinsichtlich seiner Materialstärke, derart ausgebildet, dass er mechanisch durch Krafteinwirkung vergleichsweise einfach verformbar ist und/oder eine Wanddicke beziehungsweise Materialstärke von ca. 0,5mm aufweist.

Vorgenannte Schraubenkopfanformung, insbesondere eine als Schraubenkopfkragen 28 ausgestaltete Anformung kann dabei einstückig oder aus einzelnen Segmenten gebildet sein. Weiterhin kann sie den Schraubenkopf 24 mit Profil, insbesondere den Außensechskant 26 der Kernumfassungsschraube 20, dabei vollständig oder, beispielsweise wenn aus einzelnen Segmenten gebildet, ledig anteilig, insbesondere abschnittsweise, umfänglich umgeben.

Auch ist in alternativer Ausgestaltung vorsehbar, dass die als Schraubenkopfkragen 28 ausgebildete Anformung mit der Oberkante des Schraubenkopfes 24 beziehungsweise des Schraubenkopfprofils abschließt oder der Schraubenkopfkragen 28 eine geringere Kragenhöhe als der Schraubenkopf 24 beziehungsweise das Schraubenkopfprofil aufweist.

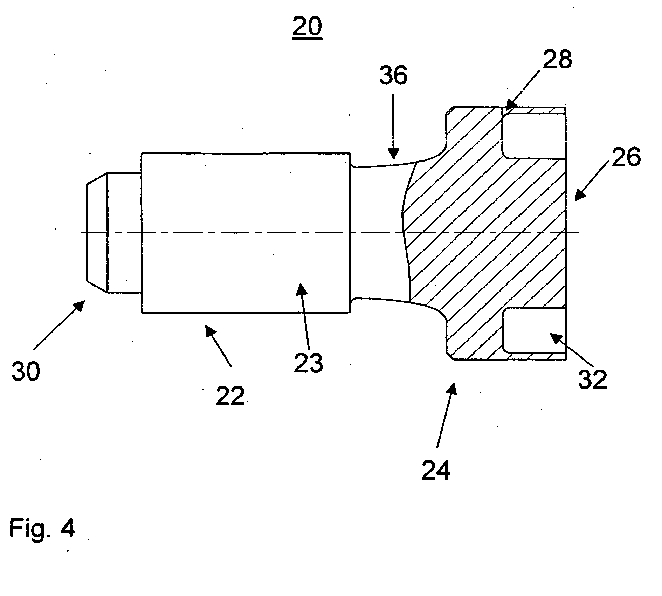

In Fig. 4 ist eine seitliche Schnittansicht einer beispielhaft ausgebildeten Kernumfassungsschraube 20 mit Schraubenkopfkragen 28 gezeigt.

Das dem Schraubenkopf abgewandte, frei Schaftende 30 ist verjüngt als Kegelstumpf ausgebildet, um ein späteres Ansetzen und/oder Eindrehen der Kernumfassungsschraube 20 zu erleichtern. Grundsätzlich sind auch weitere Ausgestaltungen des sich verjüngenden freien Schaftendes 30, beispielsweise pyramidal mit quadratischer, drei- oder vieleckiger, insbesondere sechs- oder achteckiger Grundfläche, möglich.

Der Schaft 22 weist anteilig ein Außengewinde 23, insbesondere ein M12 Gewinde auf, durch welches die Schraube 20 in eine komplementäre Gewindebohrung einer Formrippe eindrehbar und fixierbar ist.

In den Schraubenkopf 24 ist ein entsprechendes Profil 26, insbesondere ein Außensechskant, eingearbeitet, welches das Ansetzen eines entsprechenden Werkzeuges zum drehmomentkontrollierten Eindrehen beziehungsweise Einbau der Schraube ermöglicht. Als Werkzeug ist beispielsweise ein Drehmomentschlüssel mit entsprechender Nuss einsetzbar.

An den Schraubenkopf 24 ist ein Schraubenkopfkragen 28 angeformt, welcher das Kopfprofil 26 umfänglich umgibt. Zwischen Schraubenkopfkragen 28 und Kopfprofil 26, insbesondere ein Außensechskant, ist ein Abstand ausgebildet, so dass ein nutförmiger umfänglich umlaufender Freibereich 32 geschaffen ist, der den Eingriff eines entsprechenden Werkzeuges zum drehmomentkontrollierten Eindrehen der Schraube 20 ermöglicht.

Alternativ ist der Schraubenkopfkragen 28 auch aus mehreren einzelnen Segmenten ausbildbar, wobei die Segmente den Schraubenkopf 24 umfänglich dabei auch lediglich anteilig umschließen können.

Auch können die einzelnen Segmente umfänglich einander beabstandet angeordnet sein.

Der Schraubenkopfkragen 28 ist dabei derart ausgebildet, dass er bündig mit dem Kopfprofil 26 abschließt, das heißt, die Kragenhöhe entspricht der Profil- und/oder Kopfhöhe.

Alternativ kann der Schraubenkopfkragen 28 auch eine geringere Höhe als der Schraubenkopf 24 beziehungsweise sein Profil 26 aufweisen, so dass der Schraubenkopf 24 übersteht beziehungsweise das Profil 26 den Kragen 28 überragt.

Die als Kragen ausgebildete Schraubenkopfanformung 28 weist dabei eine Materialstärke von insbesondere 0,5 mm auf.

Der Übergangsbereich 36 zwischen dem Schaft 22 und dem Kopf 24 der Schraube ist rotationssymmetrisch ausgebildet und weist, wie in Fig. 4 gezeigt, einen gekrümmten, insbesondere einen nahezu parabelfömigen Verlauf auf.

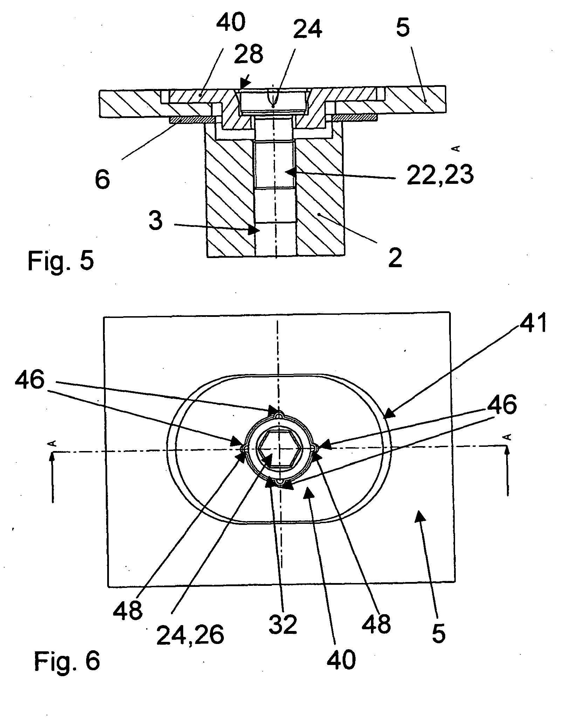

In Fig. 5 ist eine seitliche Schnittansicht eines an eine Formrippe 2, mittels einer Anordnung für den gesicherten Einbau und/oder Austausch von Kernumfassungsschrauben mit wenigstens einer Kernumfassungsschraube 20 mit Schraubenkopfanformung 28 sowie einem Sicherungsblech 40 montierten Kernumfassungsbleches 5 gezeigt. Zur Positionierung und Ausrichtung ist zwischen Formrippe 2 und Kernumfassungsblech 5 eine Distanzscheibe 6 vorgesehen.

Die eingesetzte Kernumfassungsschraube 20 gemäß Figur 2 oder Figur 4 umfasst dabei einen Schaft 22 mit Außengewinde 23 sowie einen Schraubenkopf 24 mit zumindest einer, den Schraubenkopf 24 wenigstens anteilig umfänglich umgebenden Anformung 28, welche im hier gezeigten Beispiel kragenartig ausgebildet ist.

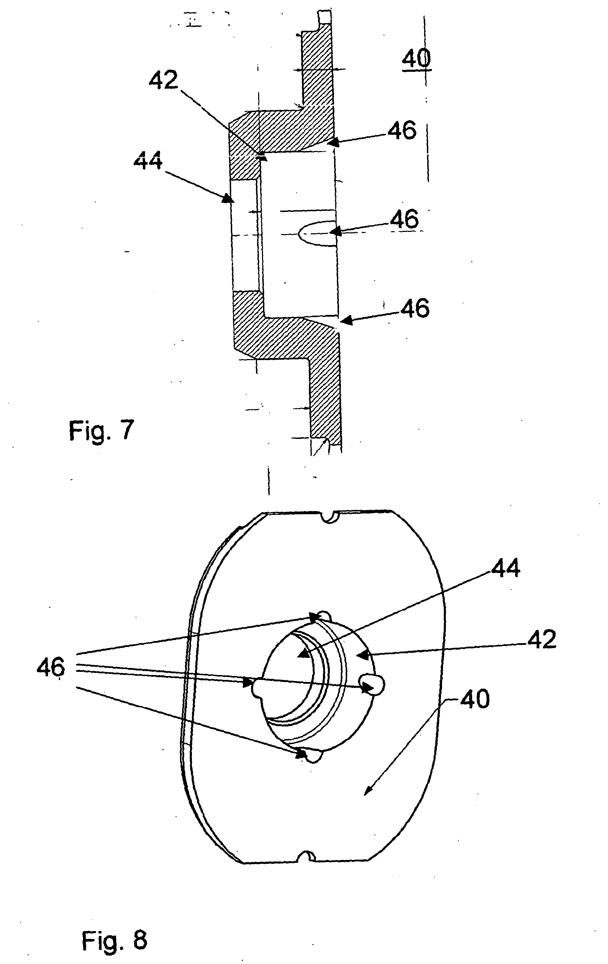

Das Sicherungsblech 40 besitzt, wie auch in Fig. 7 angegeben, eine ovale annähernd elliptische Grundform, welche im eingebauten Zustand nahezu formschlüssig und passgenau in einer entsprechenden Ausnehmung 41 des Kernumfassungsbleches 5 ruht, wodurch sie mechanisch gegen Verdrehen gesichert ist .

Grundsätzlich sind auch andere Formgestaltungen beispielsweise eine rechteckige, quadratische, kreisförmige oder einfach mehreckige Grundform des Sicherungsbleches ausbildbar.

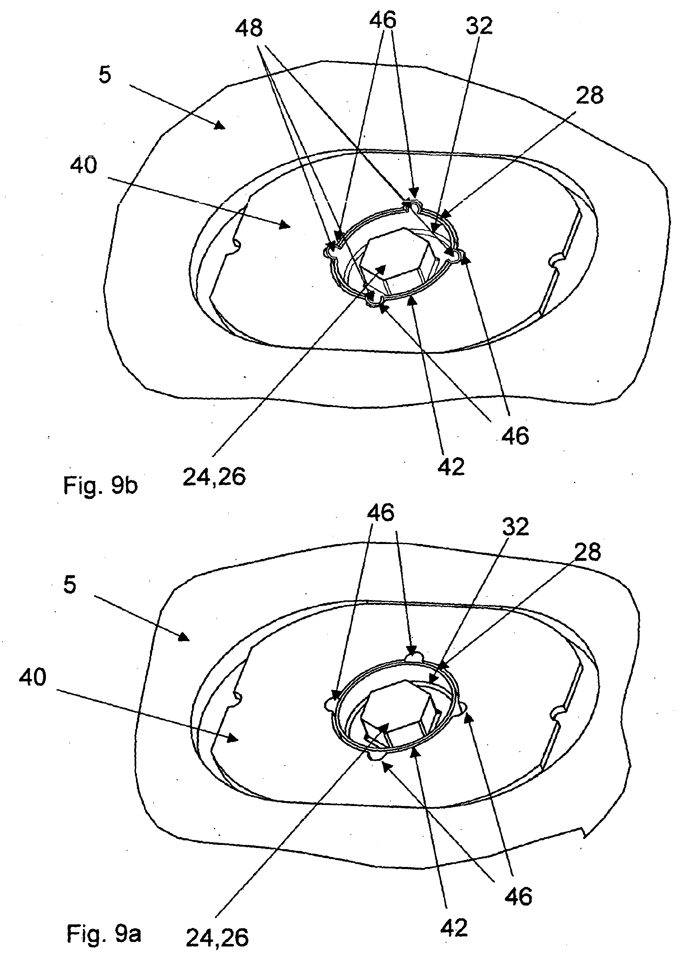

Bei der Anordnung gemäß Fig. 5 weist das Sicherungsblech 40, wie in Fig. 8 und Fig. 9 gezeigt, eine wannenartig ausgestaltete Innensenkung 42 mit Loch oder Bohrung 44 zur Aufnahme des Schraubenkopfes 24 und zum Durchgriff der Kernumfassungsschraube 20 durch das Sicherungsblech 40 und das Kernumfassungsblech 5 in die komplementäre Gewindebohrung einer Formrippe 2 auf. Weiterhin besitzt das Sicherungsblech 40 und insbesondere seine Innensenkung 42 vier gegeneinander um 90° versetzte Ausnehmung 46 zum Eingriff 48 der kragenartig ausgestalteten Schraubenkopfanformung 28 zur mechanischen Sicherung der Kernumfassungsschraube 20.

In Fig. 6 ist eine Draufsicht auf das gemäß Fig. 5 montierte Kernumfassungsblech 5 gezeigt, wobei das Sicherungsblech 40 in der komplementären Ausnehmung 41 des jeweiligen Kernumfassungsbleches 5 ruht. Weiterhin ist im Bereich der Innensenkung 42 des Sicherungsbleches 40 der Schraubenkopf 24 beziehungsweise dessen Außensechskantprofil 26 der eingebauten Kernumfassungsschraube 20 mit Schraubenkopfkragen 28 sowie der zwischen Profil 26 und Kragen 28 nutartig ausgebildete Freibereich 32 angegeben, wobei der Kragen 28 vier Verformungen 48 aufweist, die in die vier Ausnehmungen 46 des Sicherungsbleches 40 eingreifen.

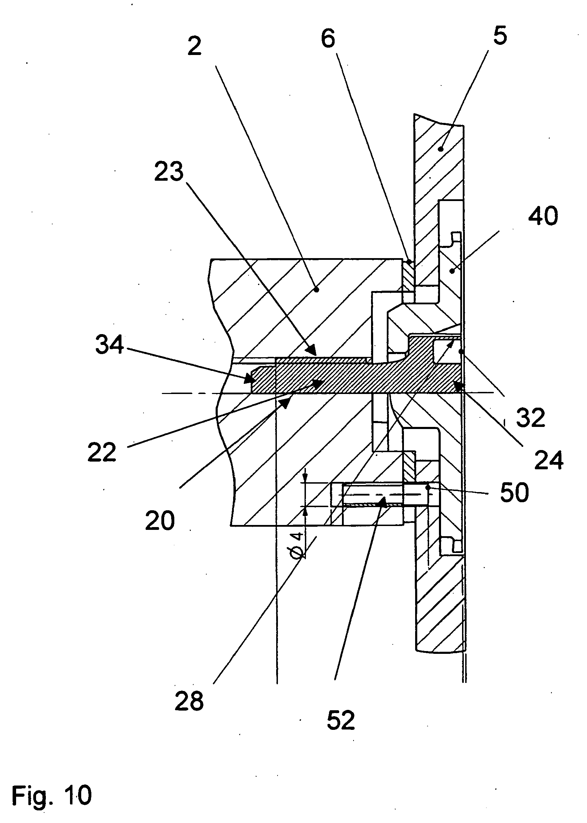

Bei Einbau wird die Kernumfassungsschraube 20 dabei über den beispielsweise Außensechskant 26 des Schraubenkopfes 24 drehmomentkontrolliert eingedreht und, wie auch in Fig. 10 gezeigt, durch mechanische Verformung der Schraubenkopfkragens 28 partiell in die Ausnehmungen 46 des Sicherungsbleches 40 gedrückt, wodurch die Verformungen 48 ausgebildet werden und die Schraube 20 gegen Verdrehen beziehungsweise Losdrehen mechanisch gesichert ist.

Alternativ kann die Schraubenkopfanformung auch ringartig oder als Scheibe ausgebildet sein, wobei beim zugehörigen Sicherungsblech die wenigstens eine Ausnehmung zum Eingriff der Schraubenkopfanformung 28 dann vorzugsweise im Bodenbereich der wannenartigen Innensenkung 42 des Sicherungsbleches 40 angeordnet ist.

In Fig. 7 ist eine seitliche Schnittansicht eines Sicherungsbleches 40 mit wannenartig ausgestalteter Innensenkung 42 zur Aufnahme des Schraubenkopfes 24 und Loch oder Bohrung 44 zum Durchgriff der Kernumfassungsschraube 20 durch das Sicherungsblech 40 und das Kernumfassungsblech 5 in die komplementäre Gewindebohrung einer Formrippe 2 angegeben. Weiterhin besitzt das Sicherungsblech 40 und insbesondere seine Innensenkung 42 vier gegeneinander um 90° versetzte Ausnehmungen 46 zum Eingriff der kragenartig ausgestalteten Schraubenkopfanformung 28 zur mechanischen Sicherung der Kernumfassungsschraube 20.

Weiterhin ist auch eine beliebige Zahl von Ausnehmungen 46 zum Eingriff des Schraubenkopfkragens 28 nach Verformung realisierbar, beispielsweise 1,2,3 6,8 usw.

In Fig. 8 ist eine räumliche Schrägansicht eines Sicherungsbleches 40 gemäß den Figuren 6 und 7 gezeigt.

Das Sicherungsblech 40 weist in eine kreisförmige, wannenartig ausgebildete Innensenkung 42 auf, in deren Boden eine erste Ausnehmung 44, insbesondere ein Loch oder Bohrung, zum Durchgriff der Kernumfassungsschraube 20 in die komplementäre Gewindebohrung 3 der Formrippen zur Befestigung des jeweiligen Kernumfassungsbleches 5 vorgesehen ist.

Die Ausnehmung 44, insbesondere eine Bohrung, der Innensenkung 42 zum Durchgriff der Kernumfassungsschraube 20 ist dabei vorzugsweise mittig beziehungsweise zentrisch im Boden der Innensenkung angeordnet.

Weiterhin sind im Sicherungsblech 40, insbesondere im oberen Randbereich der wannenartig ausgebildeten Innensenkung 42, vier als Anschrägungen ausgebildete weitere Ausnehmungen 46 vorgesehen, in welche die Anformung 28 des Schraubenkopfes 24 nach mechanischer Verformung zur Sicherung der Kernumfassungsschraube 20 gegen Verdrehen eingreift. Die Ausnehmungen 46 sind dabei um 90° gegeneinander versetzt, können aber auch um beliebige andere Winkel gegeneinander versetzt angeordnet sein.

In einer vorteilhaften Weiterbildung ist die Innensenkung 42 derart ausgestaltet, dass sie den Schraubenkopf 24 mit Anformung 28 der Kernumfassungsschraube 20 vollständig aufnimmt und der Schraubenkopf 24 vorzugsweise bündig mit der Oberseite des Sicherungsbleches 40 abschließt, wie auch in den Figuren 9a und 9b angegeben.

In Figur 9a und Figur 9b ist jeweils eine räumliche Darstellungen des im Kernumfassungsblech 20 ruhenden Sicherungsbleches 40 gemäß Fig. 6 gezeigt, wobei auch hier das Sicherungsblech 40 in der komplementären Ausnehmung 41 des jeweiligen Kernumfassungsbleches 5 ruht. Weiterhin ist im Bereich der Innensenkung 42 des Sicherungsbleches 40 der Schraubenkopf 24 beziehungsweise dessen Außensechskantprofil 26 der eingebauten Kernumfassungsschraube 20 mit Schraubenkopfkragen 28 sowie der zwischen Profil 26 und Kragen 28 nutartig ausgebildete Freibereich 32 angegeben, wobei in Fig. 9b der Kragen 28 vier Verformungen 48 aufweist, die in die vier Ausnehmungen 46 des Sicherungsbleches 40 eingreifen.

In Fig. 10 ist eine seitliche Schnittansicht eines an eine Formrippe 2, mittels einer Anordnung für den gesicherten Einbau und/oder Austausch von Kernumfassungsschrauben 4,20 mit wenigstens einer Kernumfassungsschraube 20 mit Schraubenkopfanformung 28 sowie einem Sicherungsblech 40 montierten Kernumfassungsbleches 5, beispielhaft nach Austausch einer Kernumfassungsschraube 4, gezeigt.

In Ergänzung zu der aus Fig. 5 bekannten Anordnung ist auch eine Schnittdarstellung einer erfindungsgemäßen Kernumfassungsschraube 20 mit deutlich zu erkennender Schraubenkopfanformung 28 und Freibereich 32 zwischen Schraubenkopf 24 und Anformung 28 angegeben.

Weiterhin sind in Fig. 10 wenigstens zwei Ausnehmungen, insbesondere Bohrungen 50 angegeben, welche durch die eingesetzte Distanzscheibe 6 und das jeweilige Kernumfassungsblech 5 bis in die jeweilige Formrippe 2 reichen, wobei in wenigstens zwei der Ausnehmungen, insbesondere Bohrungen 50, je ein Sicherungsstift 52 eingesetzt ist.

Den Sicherungsstiften 52 obliegt dabei die Aufgabe das jeweilige Kernumfassungsblech 5 und die eingebaute Distanzscheibe 6 nach Ausdrehen der Kernumfassungsschraube 4,20 in Position zu halten.

Bohrungstiefe und Sicherungsstiftlänge sind dabei derart aufeinander abgestimmt, dass der jeweils eingesetzte Sicherungsstift 52 mit dem jeweiligen Kernumfassungsblech 5 abschließt oder vor diesem endet. Der Stift 52 ist insbesondere kürzer als die Bohrung 50 ausgebildet.

Aufgrund der übereinstimmenden Merkmale wird zur weiteren Darlegung der Figur 10 wird auf die Beschreibungen von Figur 5 sowie Figur 4 verwiesen.

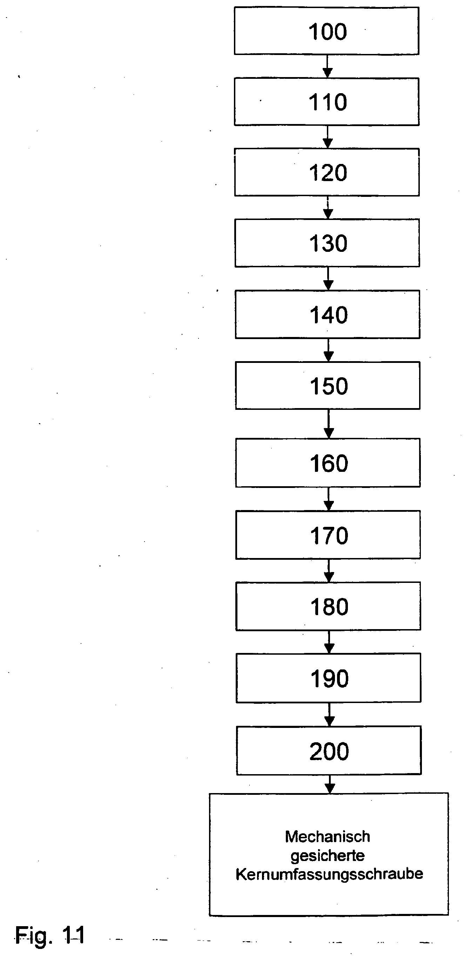

In Figur 11 ist ein beispielhaft ausgebildetes Verfahren zum gesicherten Einbau und/oder Austausch von Kernumfassungsschrauben zur Montage von Kernumfassungsblechen angegeben, wobei
- in einem ersten Schritt 100 der Schraubenkopf einer vorhandenen, auszutauschenden Kernumfassungsschraube 4 freigelegt wird
- in einem zweiten Schritt 110 ein entsprechendes Profil, insbesondere ein Vierkant, zum Herausdrehen der vorhandenen Schraube 4 eingearbeitet
- in einem dritten Schritt 120 wenigstens zwei Löcher 50 durch das Kernumfassungsblech 5 und/oder eine dahinter liegende Distanzscheibe 6 und/oder in die das Blech 5 tragende Formrippe 2 gebohrt wird,
- in einem vierten Schritt 130 je ein Sicherungsstift 52 in wenigstens zwei der Bohrungen 50 eingebracht wird, wobei die Sicherungsstifte 52 bezüglich ihrer Länge derart bemessen sind, dass sie das Kernumfassungsblech 5 nicht überragen beziehungsweise nicht überstehen, sondern insbesondere bündig mit diesem abschließen,
- in einem fünften Schritt 140 die vorhandene Schraube 4 herausgedreht und das vorhandene Sicherungsblech 7 abgezogen wird,
- in einem sechsten Schritt 150 wenigstens ein Führungsdorn in die Gewindebohrung 3 der Formrippe 2 eingedreht wird,in einem siebten Schritt 160 eine Nacharbeitung der Sitzfläche des Sicherungsbleches 7,40 durchgeführt wird,
- in einem achten 170 Schritt der Führungsdorn entfernt
- in einem neunten Schritt 180 ein neues Sicherungsblech 40 mit Innensenkung 42 und wenigstens einer Ausnehmung 46 zur mechanischen Sicherung der Kernumfassungsschraube 20 aufgesetzt wird,
- in einem zehnten Schritt 190 eine Kernumfassungsschraube 20 mit Anformung 28 am Schraubenkopf 24 eingedreht wird, und
- in einem elften Schritt 200 die Anformung 28 mechanisch durch Krafteinwirkung derart verformt wird, dass sie zumindest anteilig in die wenigstens eine Ausnehmung 46 der Innensenkung des Sicherungsbleches eingreift, wodurch eine mechanische Sicherung der neuen Kernumfassungsschraube 20 gegen Verdrehen und/oder Losdrehen bewirkt wird.

Das Eindrehen der Kernumfassungsschraube 20 erfolgt dabei drehmomentkontrolliert.
Alternativ können bei vorgenanntem Verfahren in Abhängigkeit der vorgefundenen Bedingungen einzelne Schritte auch unterbleiben oder zu einem anderen Zeitpunkt ausgeführt werden.

Sind keine Distanzscheiben vorhanden könnte beispielsweise das Einsetzen der Sicherungsstifte entfallen.

Auch die Nachbearbeitung des Sitzes des Sicherungsbleches kann je nach Bedarf durchgeführt werden.

## Patentansprüche

1. Anordnung für den gesicherten Einbau und/oder Austausch von Kernumfassungsschrauben (4,20) zur Montage von Kernumfassungsblechen (5) mit wenigstens einer Kernumfassungsschraube (20) sowie wenigstens einem Sicherungsblech (40), **dadurch gekennzeichnet, dass** die Kernumfassungsschraube (20) einen Schraubenkopf mit zumindest einer den Schraubenkopf (24) wenigstens anteilig umfänglich umgebenden Anformung (28) aufweist und im Sicherungsblech (40) wenigstens eine Innensenkung (42) zur Aufnahme des Schraubenkopfes (24) mit einer ersten Ausnehmung (44) zum Durchgriff der Kernumfassungsschraube (20) sowie wenigstens einer weiteren Ausnehmung (46) zum Eingriff der Schraubenkopfanformung (28) zur mechanischen Sicherung der Kernumfassungsschraube (20) gegen Verdrehen vorgesehen ist.

2. Anordnung nach Anspruch 1, **dadurch gekennzeichnet, dass** der Schraubenkopf (24) ein Profil (24) aufweiset.

3. Anordnung nach einem der Ansprüche 1 oder 2, **dadurch gekennzeichnet, dass** bei der jeweiligen Kernumfassungsschraube (20) die Anformung (28) ringartig oder kragenartig als Schraubenkopfkragen ausgebildet ist.

4. Anordnung nach Anspruch 3, **dadurch gekennzeichnet, dass** bei der jeweiligen Kernumfassungsschraube (20) zwischen der als Schraubenkopfkragen ausgebildeten Anformung (28) und Schraubenkopf (24) ein, insbesondere nutartiger Freibereich (32) zum Eingriff eines entsprechenden Werkzeuges zum drehmomentkontrollierten Einbau der Kernumfassungsschraube (20) ausgebildet ist

5. Anordnung nach einem der vorherigen Ansprüche 1 bis 4, **dadurch gekennzeichnet, dass** bei der jeweiligen Kernumfassungsschraube (20) die Anformung (28) mechanisch verformbar ausgebildet ist und/oder eine Materialdicke von 0,5 mm aufweist.

6. Anordnung nach einem der vorherigen Ansprüche 1 bis 5, **dadurch gekennzeichnet, dass** bei der jeweiligen Kernumfassungsschraube (20) die Anformung (28), insbesondere die als Schraubenkopfkragen ausgestaltete Anformung, einstückig oder in mehrere einzelne Segmente unterteilt ausgebildet ist.

7. Anordnung nach Anspruch 6, **dadurch gekennzeichnet, dass** bei der jeweiligen Kernumfassungsschraube (20) die Segmente umfänglich beabstandet angeordnet sind.

8. Anordnung nach einem der vorherigen Ansprüche 3 bis 7, **dadurch gekennzeichnet, dass** bei der jeweiligen Kernumfassungsschraube (20) die als Schraubenkopfkragen ausgebildete Anformung (28) bündig mit der Oberkante beziehungsweise Oberseite des Schraubenkopfes (24) abschließt oder eine geringere Kragenhöhe als der Schraubenkopf (24), insbesondere der als Außensechskant ausgestaltete Schraubenkopf (24) aufweist.

9. Anordnung nach einem der vorherigen Ansprüche 1 bis 8, **dadurch gekennzeichnet, dass** bei der jeweiligen Kernumfassungsschraube (20) der Übergangsbereich (36) zwischen dem Schaft (22) und dem Kopf (24) der Schraube einen gekrümmten, insbesondere parabelfömigen Verlauf aufweist.

10. Anordnung nach einem der vorherigen Ansprüche 1 bis 9, **dadurch gekennzeichnet, dass** der Schaft (22) der jeweiligen Kernumfassungsschraube (20) ein freies, sich verjüngendes, insbesondere konisches, Ende (30) aufweist.

11. Anordnung nach Anspruch 1 bis 10, **dadurch gekennzeichnet, dass** die Kernumfassungsschraube (20) drehmomentkontrolliert eingebaut und die Anformung (28) des Schraubenkopfes (24) derart mechanisch verformbar ist, dass die Anformung (28) in die wenigstens eine weitere Ausnehmung (46) des Sicherungsbleches (40) eingreift und die Schraube (20) damit gegen Verdrehen und/oder Losdrehen mechanisch gesichert ist.

12. Anordnung nach einem der Ansprüche 1 bis 11, **dadurch gekennzeichnet, dass** das Sicherungsblech (40) in seiner Innensenkung (42) eine vorzugsweise zentrisch oder mittig angeordnete erste Ausnehmung (44), insbesondere ein Loch (44) und/oder eine Bohrung, zum Durchgriff der Kernumfassungsschraube (20) in ein komplementäres Innengewinde (3) einer Formrippe (2) zur Befestigung des jeweiligen Kernumfassungsbleches (5) aufweist.

13. Anordnung nach einem der Ansprüche 1 bis 12, **dadurch gekennzeichnet, dass** die wenigstens eine weitere Ausnehmung (46) im oberen Rand- und/oder Wandbereich der Innensenkung (42) des Sicherungsbleches (40) angeordnet ist.

14. Anordnung nach einem der Ansprüche 1 bis 12, **dadurch gekennzeichnet, dass** die wenigstens eine weitere Ausnehmung (46) im Bodenbereich der innensenkung (42) des Sicherungsbleches (40) angeordnet ist.

15. Anordnung nach einem der Ansprüche 1 bis 14, **dadurch gekennzeichnet, dass** Sicherungsblech (40) vier um 90° gegeneinander versetzte weitere Ausnehmungen zum Eingriff der Schraubenkopfanformung (28), insbesondere der als Schraubenkopfkragen ausgestalteten Anformung, und zur mechanischen Sicherung der Kernumfassungsschraube (20) aufweist.

16. Anordnung nach einem der Ansprüche 1 bis 15, **dadurch gekennzeichnet, dass** die Innensenkung (40) derart ausgestaltet, dass sie den Schraubenkopf (24) mit Anformung (28) der Kernumfassungsschraube (20) vollständig aufnimmt und/oder der Schraubenkopf in eingebauten Zustand der Schraube bündig mit der Oberseite des Sicherungsbleches (40) abschließt.

17. Anordnung nach einem der Ansprüche 1 bis 16, **dadurch gekennzeichnet, dass** das Sicherungsblech (40) eine ovale, insbesondere elliptische Grundform aufweist und/oder in eingebauten Zustand der Kernumfassungsschraube (20) in einer entsprechend geformten Ausnehmung (41) des Kernumfassungsbleches (5) ruht, wodurch das Sicherungsblech (40) gegen Verdrehen gegenüber dem Kernumfassungsblech (5) bei Eindrehen der Kernumfassungsschraube (20) gesichert ist.

18. Anordnung nach einem der Ansprüche 1 bis 17, **dadurch gekennzeichnet, dass** die Innensenkung (42) kreisförmig ausgebildet ist und mit ihrem Innendurchmesser und ihrer Tiefe dem Schraubenkopf (42) mit Anformung (28) angepasst ist.

19. Anordnung nach einem der vorherigen Ansprüche 1 bis 18 **dadurch gekennzeichnet, dass** die Innensenkung (42) des Sicherungsbleches (40) zum Eingriff der Schraubenkopfanformung vier um 90° versetzte Ausnehmungen (46) aufweist.

20. Anordnung nach einem der vorherigen Ansprüche 12 bis 19, **dadurch gekennzeichnet, dass** wenigstens zwei Ausnehmungen und/oder Bohrungen (50) vorgesehen sind, welche durch das Sicherungsblech (40) und/oder wenigstens eine Distanzscheibe (6) und/oder das jeweilige Kernumfassungsblech (5) bis in eine jeweilige Formrippe (2) reichen und/oder eingreifen.

21. Anordnung nach Anspruch 20, **dadurch gekennzeichnet, dass** in wenigstens zwei der Ausnehmungen (50) je ein Sicherungsstift (52) eingesetzt ist.

22. Anordnung nach Anspruch 21, **dadurch gekennzeichnet, dass** die Tiefe der Ausnehmung (44) oder Bohrung und Sicherungsstiftlänge derart aufeinander abgestimmt sind, dass der jeweils eingesetzte Sicherungsstift (52) mit dem jeweiligen Kernumfassungsblech (5) abschließt, zumindest jedoch nicht übersteht.

23. Verfahren zum Einbau und/oder Austausch von Kernumfassungsschrauben zur gesicherten Befestigung von Kernumfassungsblechen mittels einer Anordnung gemäß einem der Ansprüche 1 bis 22 ,
wobei schrittweise
- der Schraubenkopf (24) einer vorhandenen, auszutauschenden Kernumfassungsschraube (4) freigelegt und
- ein entsprechendes Profil, insbesondere ein Vierkant, zum Herausdrehen der vorhandenen Schraube (4) eingearbeitet wird,
- die vorhandene Schraube (4) herausgedreht und das vorhandene Sicherungsblech (7) abgezogen wird.
- ein neues Sicherungsblech (40) mit Innensenkung (42) und wenigstens einer Ausnehmung (46) zur mechanischen Sicherung der Kernumfassungsschraube (20) aufgesetzt wird,
- eine Kernumfassungsschraube (20) mit Anformung (28) am Schraubenkopf eingedreht wird, und
- die Anformung (28) mechanisch durch Krafteinwirkung derart verformt wird, dass sie zumindest anteilig in die wenigstens eine Ausnehmung (46) der Innensenkung (42) des Sicherungsbleches (40) eingreift, wodurch eine mechanische Sicherung der neuen Kernumfassungsschraube (20) gegen Verdrehen und/oder Losdrehen bewirkt wird.

24. Verfahren nach Anspruch 23, **dadurch gekennzeichnet, dass** vor Aufsetzen des Sicherungsbleches (40) eine Nacharbeitung der Sitzfläche des Sicherungsbleches (40) durchgeführt wird.

25. Verfahren nach einem der Ansprüche 23 bis 24, **dadurch gekennzeichnet, dass** vor Bearbeitung der Sitzfläche des Sicherungsbleches (40) ein Führungsdorn installiert wird, der nach Bearbeitung der Sitzfläche wieder entfernt wird.

26. Verfahren nach einem der Ansprüche 23 bis 25, **dadurch gekennzeichnet, dass** vor Herausdrehen der Schraube (20) wenigstens zwei Ausnehmungen und/oder Bohrungen (50) durch das Sicherungsblech (40) und/oder wenigstens eine Distanzscheibe (6) und/oder das jeweilige Kernumfassungsblech (5) bis in eine jeweilige Formrippe (2) gebohrt werden.

27. Verfahren nach Anspruch 26, **dadurch gekennzeichnet, dass** in wenigstens zwei der gebohrten Ausnehmungen (50) je ein Sicherungsstift (52) eingesetzt wird.

28. Verfahren nach Anspruch 27, **dadurch gekennzeichnet, dass** Bohrtiefe und Sicherungsstiftlänge derart aufeinander abgestimmt werden, dass der jeweils eingesetzte Sicherungsstift (52) mit dem jeweiligen Kernumfassungsblech (5) abschließt zumindest jedoch nicht übersteht.

## Claims

1. Arrangement for the secured installation and/or exchange of core perimeter screws (4, 20) for the fitting of core perimeter plates (5), comprising at least one core perimeter screw (20) and at least one locking plate (40), **characterized in that** the core perimeter screw (20) has a screw head having at least one lip (28) which at least partially circumferentially surrounds the screw head (24), and in the locking plate (40) is provided at least one internal counterbore (42), for the reception of the screw head (24), having a first recess (44) for the passage of the core perimeter screw (20) and at least one further recess (46) for the engagement of the screw head lip (28) for mechanical securement of the core perimeter screw (20) against turning.

2. Arrangement according to Claim 1, **characterized in that** the screw head (24) has a profile (24).

3. Arrangement according to one of Claims 1 or 2, **characterized in that**, in the respective core perimeter screw (20), the lip (28) is configured in the style of a ring or collar as a screw head collar.

4. Arrangement according to Claim 3, **characterized in that**, in the respective core perimeter screw (20), an, in particular, groove-like open region (32) for the engagement of an appropriate tool for the torque-controlled installation of the core perimeter screw (20) is configured between the lip (28) configured as a screw head collar and the screw head (24).

5. Arrangement according to one of Claims 1 to 4, **characterized in that**, in the respective core perimeter screw (20), the lip (28) is configured such that it is mechanically deformable, and/or has a material thickness of 0.5 mm.

6. Arrangement according to one of the previous claims 1 to 5, **characterized in that**, in the respective core perimeter screw (20), the lip (28), in particular the lip designed as a screw head collar, is configured in one piece or such that it is divided into a plurality of individual segments.

7. Arrangement according to Claim 6, **characterized in that**, in the respective core perimeter screw (20), the segments are arranged at a circumferential distance apart.

8. Arrangement according to one of the previous claims 3 to 7, **characterized in that**, in the respective core perimeter screw (20), the lip (28) configured as a screw head collar terminates flush with the top edge or top side of the screw head (24), or has a smaller collar height than the screw head (24), in particular the screw head (24) designed as a hexagon socket.

9. Arrangement according to one of the previous claims 1 to 8, **characterized in that**, in the respective core perimeter screw (20), the transition region (36) between the shank (22) and the head (24) of the screw has a curved, in particular parabolic, profile.

10. Arrangement according to one of the previous claims 1 to 9, **characterized in that** the shank (22) of the respective core perimeter screw (20) has a free, tapered, in particular conical, end (30).

11. Arrangement according to Claims 1 to 10, **characterized in that** the core perimeter screw (20) is installed in a torque-controlled manner and the lip (28) of the screw head (24) is mechanically deformable such that the lip (28) engages in the at least one further recess (46) of the locking plate (40) and the screw (20) is thus mechanically secured against turning and/or unscrewing.

12. Arrangement according to one of Claims 1 to 11, **characterized in that** the locking plate (40), in its internal counterbore (42), has a preferably centrically or centrally arranged first recess (44), in particular a hole (44) and/or a bore, for the passage of the core perimeter screw (20) into a complementary internal thread (3) of a shaped rib (2) for the fastening of the respective core perimeter plate (5).

13. Arrangement according to one of Claims 1 to 12, **characterized in that** the at least one further recess (46) is arranged in the upper rim and/or wall region of the internal counterbore (42) of the locking plate (40).

14. Arrangement according to one of Claims 1 to 12, **characterized in that** the at least one further recess (46) is arranged in the floor region of the internal counterbore (42) of the locking plate (40).

15. Arrangement according to one or Claims 1 to 4, **characterized in that** the locking plate (40) has four further recesses, mutually offset by 90°, for the engagement of the screw head lip (28), in particular of the lip designed as a screw head collar, and for mechanical securement of the core perimeter screw (20).

16. Arrangement according to one of Claims 1 to 15, **characterized in that** the internal counterbore (42) is designed such that it fully receives the screw head (24) with lip (28) of the core perimeter screw (20), and/or the screw head, in the installed state of the screw, terminates flush with the top side of the locking plate (40).

17. Arrangement according to one of Claims 1 to 16, **characterized in that** the locking plate (40) has an oval, in particular elliptical basic shape and/or, in the installed state of the core perimeter screw (20), rests in an appropriately shaped recess (41) of the core perimeter plate (5), whereby the locking plate (40) is secured against turning in relation to the core perimeter plate (5) as the core perimeter screw (20) is screwed in.

18. Arrangement according to one of Claims 1 to 17, **characterized in that** the internal counterbore (42) is of circular configuration and is matched in terms of its inner diameter and its depth to the screw head (24) with lip (28).

19. Arrangement according to one of Claims 1 to 18, **characterized in that** the internal counterbore (42) of the locking plate (40) for the engagement of the screw head lip has four 90°-offset recesses (46).

20. Arrangement according to one of the previous Claims 12 to 19, **characterized in that** at least two recesses and/or bores (50), which extend and/or reach through the locking plate (40) and/or at least one spacer washer (6) and/or the respective core perimeter plate (5) into a respective shaped rib (2), are provided.

21. Arrangement according to Claim 20, **characterized in that** in at least two of the recesses (50) a locking pin (52) is respectively inserted.

22. Arrangement according to Claim 21, **characterized in that** the depth of the recess (44) or bore and the locking pin length are coordinated such that the respectively inserted locking pin (52) terminates flush with the respective core perimeter plate (5), or at least does not protrude.

23. Method for installing and/or exchanging core perimeter screws for the secured fastening of core perimeter plates by means of an arrangement according to one of Claims 1 to 22,
wherein, step by step,
- the screw head (24) of an existing core perimeter screw (4), which is to be exchanged, is exposed, and
- an appropriate profile, in particular a square, is formed for the unscrewing of the existing screw (4),
- the existing screw (4) is unscrewed and the existing locking plate (7) is pulled off,
- a new locking plate (40) with internal counterbore (42) and at least one recess (46) for the mechanical securement of the core perimeter screw (20) is put on,
- a core perimeter screw (20) with lip (28) on the screw head is screwed in, and
- the lip (28) is mechanically deformed by force action such that it engages, at least partially, in the at least one recess (46) of the internal counterbore (42) of the locking plate (40), whereby a mechanical securement of the new core perimeter screw (20) against turning and/or unscrewing is produced.

24. Method according to Claim 23, **characterized in that**, prior to the mounting of the locking plate (40), a finishing of the bearing surface of the locking plate (40) is performed.

25. Method according to one of Claims 23 to 24, **characterized in that**, prior to machining of the bearing surface of the locking plate (40), a guide pin is installed, which guide pin is removed again after machining of the bearing surface.

26. Method according to one of Claims 23 to 25, **characterized in that**, prior to unscrewing of the screw (20), at least two recesses and/or bores (50) are drilled through the locking plate (40) and/or at least one spacer washer (6) and/or the respective core perimeter plate (5) into a respective shaped rib (2).

27. Method according to Claim 26, **characterized in that** in at least two of the drilled recesses (50) a locking pin (52) is respectively inserted.

28. Method according to Claim 27, **characterized in that** the drilling depth and the locking pin length are coordinated such that the respectively inserted locking pin (52) terminates flush with the respective core perimeter plate (5), or at least does not protrude.

## Revendications

1. Ensemble de montage sûr et/ou de remplacement de vis (4, 20) d'enceinte de coeur en vue du montage de tôles (5) d'enceinte de coeur, l'ensemble présentant au moins une vis (20) d'enceinte de coeur ainsi qu'au moins une plaque de blocage (40),
**caractérisé en ce que**
la vis (20) d'enceinte de coeur présente une tête de vis dotée d'au moins une moulure (28) qui entoure au moins une partie de la périphérie de la tête de vis (24) et **en ce qu'**au moins une dépression intérieure (42) destinée à reprendre la tête (24) de la vis qui présente une première découpe (44) destinée à être traversée par la vis (20) d'enceinte de coeur ainsi qu'au moins une autre découpe (46) destinée à être engagée par la moulure (28) de la tête de vis pour empêcher mécaniquement la vis (20) d'enceinte de coeur de tourner sont prévues dans la plaque de blocage (40).

2. Ensemble selon la revendication 1, **caractérisé en ce que** la tête (24) de la vis présente un profil (24).

3. Ensemble selon l'une des revendications 1 ou 2, **caractérisé en ce que** la moulure (28) de la vis (20) d'enceinte de coeur a la forme d'un anneau ou d'un collet de tête de vis.

4. Ensemble selon la revendication 3, **caractérisé en ce qu'**une partie libre (32), en particulier en forme de rainure, est formée pour permettre l'engagement d'un outil qui permet de monter la vis (20) d'enceinte de coeur en contrôlant le couple de rotation, est prévue sur la vis (20) d'enceinte de coeur entre la moulure (28) configurée comme collet de tête de vis et la tête (24) de la vis.

5. Ensemble selon l'une des revendications 1 à 4 qui précèdent, **caractérisé en ce que** la moulure (28) de la vis (20) d'enceinte de coeur est mécaniquement déformable et/ou présente une épaisseur de matière de 0,5 mm.

6. Ensemble selon l'une des revendications 1 à 5 qui précèdent, **caractérisé en ce que** la moulure (28) de la vis (20) d'enceinte de coeur, en particulier la moulure configurée comme collet de tête de vis, est formée d'un seul tenant ou en plusieurs segments distincts.

7. Ensemble selon la revendication 6, **caractérisé en ce que** les segments sont disposés à distance les uns des autres à la périphérie de la vis (20) d'enceinte de coeur.

8. Ensemble selon l'une des revendications 3 à 7 qui précèdent, **caractérisé en ce que** la moulure (28) de la vis (20) d'enceinte de coeur configurée comme collet de tête de vis se raccorde à chant avec le bord supérieur ou le côté supérieur de la tête (24) de la vis ou présente une hauteur de collet plus petite que la tête (24) de la vis et en particulier de la tête (24) de la vis configurée comme vis à six pans extérieurs.

9. Ensemble selon l'une des revendications 1 à 8 qui précèdent, **caractérisé en ce que** la partie de transition (36) entre la tige (22) et la tête (24) de la vis (20) d'enceinte de coeur présente une courbure en particulier de forme parabolique.

10. Ensemble selon l'une des revendications 1 à 9 qui précèdent, **caractérisé en ce que** la tige (22) de la vis (20) d'enceinte de coeur présente une extrémité (30) libre qui se rétrécit, en particulier coniquement.

11. Ensemble selon les revendications 1 à 10, **caractérisé en ce que** la vis (20) d'enceinte de coeur est montée en contrôlant le couple de rotation et **en ce que** la moulure (28) de la tête (24) de la vis peut être déformée mécaniquement de telle sorte que la moulure (28) s'engage dans la ou les autres découpes (46) de la plaque de blocage (40), la vis (20) étant ainsi protégée mécaniquement d'une rotation et/ou d'un desserrage.

12. Ensemble selon l'une des revendications 1 à 11, **caractérisé en ce que** la plaque de blocage (40) présente dans sa dépression intérieure (42) une première découpe (44), en particulier un trou (44), disposée de préférence au centre ou au milieu, et/ou un alésage qui permettent à la vis (20) d'enceinte de coeur de s'engager dans un filet intérieur (3) complémentaire d'une nervure moulée (2) destinée à fixer la tôle (5) d'enceinte de coeur.

13. Ensemble selon l'une des revendications 1 à 12, **caractérisé en ce que** la ou les autres découpes (46) sont disposées dans la bordure et/ou la paroi supérieure de la dépression intérieure (42) de la plaque de blocage (40).

14. Ensemble selon l'une des revendications 1 à 12, **caractérisé en ce que** la ou les autres découpes (46) sont disposées au niveau du fond de la dépression intérieure (42) de la plaque de blocage (40).

15. Ensemble selon l'une des revendications 1 à 14, **caractérisé en ce que** la plaque de blocage (40) présente quatre autres découpes décalées mutuellement de 90° pour permettre l'engagement de la moulure (28) de la tête de la vis, en particulier de la moulure configurée comme collet de la tête de la vis, et pour bloquer mécaniquement la vis (20) d'enceinte de coeur.

16. Ensemble selon l'une des revendications 1 à 15, **caractérisé en ce que** la dépression intérieure (42) est configurée de manière à reprendre complètement la tête (24) dotée d'une moulure (28) de la vis (20) d'enceinte de coeur et/ou **en ce qu'**en position montée, la tête de la vis se raccorde à chant avec le côté supérieur de la plaque de blocage (40).

17. Ensemble selon l'une des revendications 1 à 16, **caractérisé en ce que** la plaque de blocage (40) présente une forme de base ovale et en particulier elliptique et/ou, lorsque la vis (20) d'enceinte de coeur est montée, repose dans une découpe (41) de forme appropriée de la tôle (5) d'enceinte de coeur, de sorte que la plaque de blocage (40) est empêchée de tourner par rapport à la tôle (5) d'enceinte de coeur lorsque la vis (20) d'enceinte de coeur est serrée.

18. Ensemble selon l'une des revendications 1 à 17, **caractérisé en ce que** la dépression intérieure (42) a une forme circulaire dont le diamètre intérieur et la profondeur sont adaptés à ceux de la tête (24) de la vis dotée d'une moulure (28).

19. Ensemble selon l'une des revendications 1 à 18 qui précèdent, **caractérisé en ce que** la dépression intérieure (42) de la plaque de blocage (40) présente quatre découpes (46) décalées de 90° et qui engagent la moulure de la tête de la vis.

20. Ensemble selon l'une des revendications 12 à 19 qui précèdent, **caractérisé en ce qu'**il présente au moins deux découpes et/ou alésages (50) qui s'étendent et/ou s'engagent dans la plaque de blocage (40) et/ou dans au moins un disque d'écartement (6) et/ou dans la tôle (5) d'enceinte de coeur jusque dans une nervure moulée (2).

21. Ensemble selon la revendication 20, **caractérisé en ce qu'**une tige de blocage (52) est insérée dans au moins deux des découpes (50).

22. Ensemble selon la revendication 21, **caractérisé en ce que** la profondeur de la découpe (44) ou de l'alésage et la longueur des tiges de blocage sont accordées mutuellement de telle sorte que lorsque la tige de blocage (52) est insérée, elle se raccorde à chant avec la tôle (5) d'enceinte de coeur mais au moins n'en déborde pas.

23. Procédé de montage et/ou de remplacement de vis d'enceinte de coeur servant à fixer de manière sûre des tôles d'enceinte de coeur au moyen d'un ensemble selon l'une des revendications 1 à 22, dans lequel, successivement :
- la tête (24) d'une vis (4) d'enceinte de coeur existante et à remplacer est libérée,
- un profil approprié, en particulier à quatre pans, est formé pour dévisser la vis (4) existante,
- la vis (4) existante est dévissée et la plaque de blocage (7) existante est enlevée,
- une nouvelle plaque de blocage (40) présentant une dépression intérieure (42) et au moins une découpe (46) de blocage mécanique de la vis (20) d'enceinte de coeur est placée,
- une vis (20) d'enceinte de coeur dotée d'une moulure (28) est vissée sur la tête de la vis et
- la moulure (28) est déformée mécaniquement par l'application d'une force de manière à s'engager au moins partiellement dans la ou les découpes (46) de la dépression intérieure (42) de la plaque de blocage (40), de telle sorte que la nouvelle vis (20) d'enceinte de coeur soit empêchée mécaniquement de tourner et/ou de se dévisser.

24. Procédé selon la revendication 23, **caractérisé en ce qu'**avant de placer la plaque de blocage (40), la surface d'assise de la plaque de blocage (40) reçoit un usinage de finition.

25. Procédé selon l'une des revendications 23 à 24, **caractérisé en ce qu'**avant la finition de la surface d'assise de la plaque de blocage (40), un mandrin de guidage est installé avant d'être de nouveau enlevé après la finition de la surface d'assise.

26. Procédé selon l'une des revendications 23 à 25, **caractérisé en ce qu'**avant le desserrage de la vis (20), au moins deux découpes et/ou alésages (50) sont ménagés à travers la plaque de blocage (40) et/ou au moins à travers un disque d'écartement (6) et/ou la tôle (5) d'enceinte de coeur jusque dans une nervure moulée (2).

27. Procédé selon la revendication 26, **caractérisé en ce qu'**une tige de blocage (52) est insérée dans au moins deux des découpes (50) alésées.

28. Procédé selon la revendication 27, **caractérisé en ce que** la profondeur de l'alésage et la longueur de la tige de blocage sont accordées mutuellement de telle sorte que la tige de blocage (52) insérée se raccorde à chant avec la tôle (5) d'enceinte de coeur mais au moins n'en déborde pas.
